# EUROPEAN PATENT APPLICATION

(11) **EP 4 470 658 A1**
(43) Date of publication of application: **04.12.2024**
(21) Application number: 23176004.2
(22) Date of filing: 30.05.2023
(51) Int. Cl.: B01D 53/86

(54) **VACUUM CARBURIZING HARMFUL EXHAUST GASES REDUCTION APPARATUS AND VACUUM CARBURIZING HARMFUL EXHAUST GASES REDUCTION METHOD USING THE SAME**

(71) Applicant: Dongwoo HST Co., Ltd., Asan-si, Chungcheongnam-do 31435 (KR)
(72) Inventor: Chung, Soo Jin, 06580 Seoul (KR); Ahn, Seung Gyun, 07602 Seoul (KR); Kim, Jae Hoon, 08795 Seoul (KR); Kang, Jae Gue, 31771 Dangjin-si (KR); Yeo, Gwon Koo, 16809 Yongin-si (KR); Shin, Young Min, Namyangju-si, 12157 (KR)
(74) Representative: Patentanwaltskanzlei Matschnig & Forsthuber OG

(57) **Abstract**

The present invention relates a vacuum carburizing harmful exhaust gas reduction apparatus and vacuum carburizing harmful exhaust gas reduction method using the same. Vacuum carburizing harmful exhaust gas reduction apparatus includes a high-temperature decomposition unit (210) configured to heat exhaust gases discharged from a vacuum pump (120) in the vacuum carburizing process to a temperature ranging from 500 to 1500°C, and a high-temperature catalyst unit (220) comprising a supported catalyst supporting a catalyst including one or more selected from a group including platinum (Pt), palladium (Pd), and alloys thereof and configured to allow the exhaust gases heated in the high-temperature decomposition unit to contact the supported catalyst. According to the present invention, it is possible to significantly reduce harmful substances such as carbon monoxide, nitrogen oxides, benzene, and total hydrocarbons (THC) in the exhaust gases expelled by the vacuum pump during the vacuum carburizing process.

## Description

### BACKGROUND OF THE INVENTION

### Field of the Invention

The present invention relates to a vacuum carburizing harmful exhaust gas reduction apparatus and vacuum carburizing harmful exhaust gas reduction method using the same, and more particularly, to an apparatus and method capable of significantly reducing harmful substances such as carbon monoxide, nitrogen oxides, benzene, and total hydrocarbons (THC) emitted through exhaust gases expelled by a vacuum pump during the vacuum carburizing process through high-temperature and catalytic treatment.

### Description of the Related Art

Recently, ensuring the durability of transmission components has emerged as a significant challenge in line with the high-performance and high-output trend of automotive engines, meanwhile, to improve the durability of the transmission, the first prerequisite is to enhance the durability of the gears, which are the key components.

In conventional gas carburizing of automotive transmission gears or shaft components, the presence of oxygen in the heat treatment atmosphere gas interacts with high inclusion propensity elements such as Si, Cr, and Mn within the gear material, leading to the formation of oxides such as SiO₂, Cr₂O₃, and MnO₂, which precipitate at the grain boundaries of the material, resulting in grain boundary oxidation and causing a decrease in bending fatigue strength and contact fatigue strength of the gears or shafts. The low-pressure vacuum carburizing process has been developed as a heat treatment method to address these issues.

The aforementioned vacuum carburizing process, conducted under a vacuum atmosphere and using high-pressure gas for carburization, is a new heat treatment method known for significantly improving durability (fatigue and wear resistance) by preventing the formation of undesirable surface layers, minimizing carbon dioxide emissions during carburization, predominantly using gas as the quenching medium, being environment-friendly with minimal waste oil/water treatment, and eliminating the need for post-processing steps such as shot blasting to remove foreign materials, thus reducing production time.

When applying the vacuum carburizing process, the grain boundary oxidation layer is reduced to zero, resulting in an improvement of approximately 20% in bending fatigue strength and over 30% in contact fatigue strength. Particularly, low-pressure vacuum carburizing is an environmental-friendly heat treatment process that involves calculating the surface area of the gears or shafts to be treated, and applying a pulsating carburizing and diffusion process with a carbon flux tailored to achieve the desired effective case depth. In addition, it is an excellent heat treatment method in terms of productivity, as it can be performed at high temperatures of around 1050°C.

During the vacuum carburizing process, acetylene (C₂H₂) is used in the carburization stage and nitrogen (N₂) in the diffusion stage, and the vacuum pump exhausts synthetic oil (esters, RCOO-R'), which reacts with acetone (CH₃OH) emitted from the acetylene cylinder and oxygen from the furnace refractory board at high temperatures to undergo organic chemical decomposition, resulting in the presence of carbon monoxide (CO), nitrogen oxides (NOx), sulfur oxides (SOx), volatile organic compounds (VOCs), tar, and soot (particulate matter) in the exhaust gas, leading to environmental pollution concerns.

Conventional methods attempted to address this issue by filtering harmful exhaust gases like tar and soot at low temperatures and treating them with catalysts like Ti, but they were unable to fully resolve the persistent problems of excessive tar and soot generation, resulting in filter blockage, accelerated catalyst poisoning and degradation.

### SUMMARY OF THE INVENTION

The present invention has been conceived to solve the above problems and it is an object of the present invention to provide a vacuum carburizing harmful exhaust gas reduction apparatus and vacuum carburizing harmful exhaust gas reduction method using the same that can effectively reducing harmful substances such as carbon monoxide, nitrogen oxides, benzene, and total hydrocarbons (THC) emitted through exhaust gases discharged by a vacuum pump during the vacuum carburizing process through high-temperature and catalytic treatment, thereby enhancing stability and efficiency.

In order to achieve the above objects, a vacuum carburizing harmful exhaust gas reduction apparatus according to the present invention includes a high-temperature decomposition unit configured to heat exhaust gases discharged from a vacuum pump in the vacuum carburizing process to a temperature ranging from 500 to 1500°C, and a high-temperature catalyst unit comprising a supported catalyst supporting a catalyst including one or more selected from a group including platinum (Pt), palladium (Pd), and alloys thereof and configured to allow the exhaust gases heated in the high-temperature decomposition unit to contact the supported catalyst.

The high-temperature decomposition unit may receive injected air to create an oxidizing atmosphere, the injected air and the introduced exhaust gases may have a volumetric ratio ranging from 1:1 to 1:3, and the air may be injected to maintain a hydrogen concentration inside the high-temperature decomposition unit at 4% by volume or less.

The supported catalyst may be a ceramic honeycomb carrier.

The catalyst may be supported on a catalyst support including Lanthanum (La) doped alumina, and the supported catalyst may further include zeolite.

A vacuum carburizing harmful exhaust gas reduction method using the vacuum carburizing harmful exhaust gas reduction apparatus according to another invention includes introducing exhaust gases discharged from the vacuum pump in the vacuum carburizing process into the high-temperature decomposition unit, heating the exhaust gases introduced into the high-temperature decomposition unit to the temperature ranging from 500 to 1500°C, and introducing the exhaust gases undergone heating treatment in the high-temperature decomposition unit into the high-temperature catalyst unit to contact the supported catalyst.

The introduced exhaust gases may be heated in the oxidizing atmosphere created by injecting air into the high-temperature decomposition unit.

### BRIEF DESCRIPTION OF THE DRAWINGS

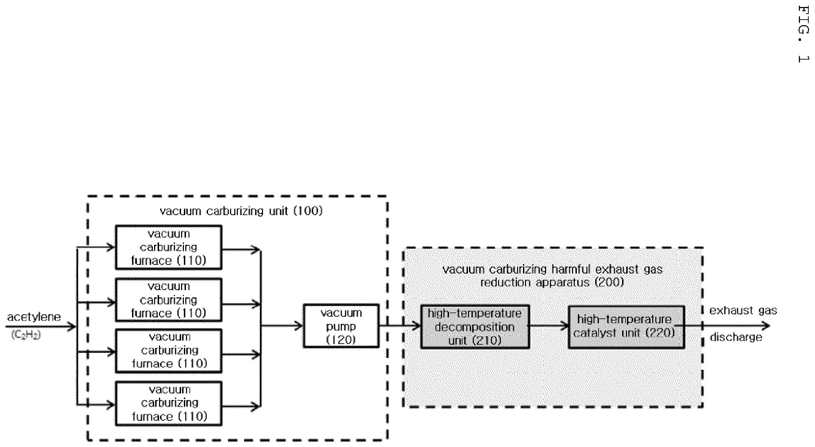

FIG. 1 is a flowchart illustrating a vacuum carburizing harmful exhaust gas reduction apparatus according to an embodiment of the present invention.

### DETAILED DESCRIPTION OF THE INVENTION

Hereinafter, the present invention is described in detail through embodiments. However, the embodiments are provided to facilitate the implementation of the invention by those skilled in the art rather than imply a limitation on the technical concept and scope of the present invention.

During the typical high-temperature carburizing process, C₂H₂ and N₂, which are included in the vent gases produced from the process, react with the pump oil of the vacuum pump 120, undergoing organic chemical decomposition, resulting in the generation of harmful substances such as incomplete carbon monoxide CO), nitrogen oxides (NOx), sulfur oxides (SOx), and volatile organic compounds (VOCs). Furthermore, these vent gases undergo high-temperature reactions with substances such as acetone (CH3OH) emitted from the acetylene cylinder and oxygen contained in the furnace refractory board, resulting in organic chemical decomposition, leading to the emission of harmful substances such as carbon monoxide (CO), nitrogen oxides (NOx), sulfur oxides (SOx), volatile organic compounds (VOCs), along with tar and soot, in the form of exhaust gases.

Therefore, the present invention involves introducing the exhaust gases expelled through the vacuum pump 120 after passing through the vacuum carburizing furnace 110 into the high-temperature decomposition unit 210 and heating the exhausts to a range of 500 to 1,500°C, preferably 800 to 1,000°C, using an electric heater or a gas burner, which causes the harmful substances in the exhaust gases undergo heat-generating and combustion reactions, oxidizing and removing substances consisting of hydrocarbons, tar, soot, etc., as well as removing carbon monoxide.

Here, injecting air into the high-temperature decomposition unit 210 to create an oxidizing atmosphere promotes complete combustion and enhances the heat-generating reactions. Air may be injected through a blower in the upstream of the vacuum pump 120.

It is efficient to inject air at a ratio of 1:1 to 3:1 relative to the total flow rate of the introduced exhaust gases. Furthermore, in the exhaust gases produced from the decomposition of acetylene (C₂H₂) gas, the hydrogen (H₂) concentration is more than 30% by volume, which poses a risk of explosion when reacting with oxygen. Therefore, it is desirable to adjust the air injection in the high-temperature decomposition unit 210 to maintain the hydrogen concentration inside below 4%.

When the exhaust gases, in a low-temperature state and expelled from the vacuum pump 120, bypass the high-temperature decomposition unit 210 and directly interact with the catalyst in the high-temperature catalyst unit 220 to be described later, there is a potential risk of tar, soot, and other substances accumulating on the catalyst, resulting in a significant decline in catalyst activity and durability.

The exhaust gases heated in the high-temperature decomposition unit 210 are partially or entirely introduced into the high-temperature catalyst unit 220 including the supported catalyst to come into contact with the supported catalyst.

The supported catalyst includes one or more catalysts selected from the group of Pt, Pd, and alloys thereof and is preferably composed of a ceramic honeycomb structure substrate to enhance heat resistance. The ceramic honeycomb structure substrate may be made of cordierite material.

When a carrier other than a honeycomb structure, such as a granular, pellet-type, or disk-type carrier, is used, there is a possibility of increased back pressure in the exhaust gases, which may lead to operational issues with the device of the present invention, including a decrease in exhaust gas purification efficiency. Therefore, using a honeycomb structure as the carrier ensures the advantage of facilitating a smoother flow of the exhaust gases.

In more detail, it is desirable for the honeycomb ceramic carrier to have a cell density of 400 cells per square inch and a wall thickness of 6 mil (400/6 cell/in2) in order to minimize back pressure. For reference, the efficiency of the catalyst may be enhanced by increasing the overall surface area of the catalyst by increasing the cell density, reducing the thickness of the walls, and increasing the volume of the catalyst, but this may also increase the back pressure.

The catalyst may include one or more catalysts selected from the group of Pt, Pd, and alloys thereof. The catalyst, as an oxidation catalyst, may facilitate the oxidation of substances such as tar, soot, carbon monoxide, and hydrocarbons, and ideally, a Pt/Pd-based catalyst with a Pt:Pd ratio of 4:1 is preferred.

To maximize the efficiency of the catalyst by increasing the surface area, the catalyst may be supported on an alumina catalyst support. Furthermore, for improved heat resistance, an alloyed alumina catalyst support doped with a rare-earth element, such as lanthanum (La), may be utilized.

When the alumina catalyst support is not included, the surface area may significantly decrease with increasing temperature, leading to a decrease in catalyst performance.

Furthermore, the supported catalyst according to the present invention may also include catalyst promoters such as zeolites to effectively remove tar, soot, long-chain hydrocarbons, and other substances at low temperatures.

Hereinafter, a description is made of the method for reducing harmful exhaust gases using the vacuum carburizing harmful exhaust gas reduction apparatus 200 according to the present invention.

First, the exhaust gases expelled from the vacuum pump 120 in the vacuum carburizing process are introduced into the high-temperature decomposition unit 210 (Step S1).

Afterward, the exhaust gases introduced in the high-temperature decomposition unit 210 are heated to a temperature ranging from 500 to 1500°C. (Step 2) The descriptions of the heating method and reasons, which have already been provided above, are omitted here. Next, the exhaust gases that has undergone the heating treatment in the high-temperature decomposition unit 210 are introduced into the high-temperature catalyst unit 220 to come into contact with the supported catalyst, inducing catalytic reactions. (Step S3) Particularly, injecting air into the high-temperature decomposition unit 210 prior to step S2 to heat the incoming exhaust gases in an oxidizing atmosphere is advantageous for complete combustion and heat generation reactions. Air may be injected through a blower in the upstream of the vacuum pump 120. The injection of air at a ratio of 1 to 3 in relation to the total flow rate of the incoming exhaust gases is efficient, and there is a risk of explosion when the exhaust gases resulting from the decomposition of acetylene (C₂H₂) with a hydrogen (H₂) concentration of over 30% by volume react with oxygen. Therefore, by injecting air, the hydrogen concentration within the high-temperature decomposition unit 210 may be reduced to below 4%, thereby lowering the risk of explosion.

### <Experimental evaluation>

### 1. Manufacturing of an apparatus for reducing harmful exhaust gases in vacuum carburizing according to the present invention

First, a supported catalyst was prepared using a honeycomb ceramic substrate made of cordierite material. The honeycomb ceramic substrate had a cell density of 400 cells per square inch and a wall thickness of 6 mil (400/6 cells/in²), with a total volume of 2 liters. Next, La-doped alumina catalyst support with a concentration of 350 g/L as a base and zeolite with a concentration of 50 g/L as a catalyst promoter were added to the honeycomb carrier. Afterwards, platinum (Pt) and palladium (Pd) were impregnated onto the alumina catalyst support at a ratio of 4:1 with a concentration of 9 g/L as a basis to synthesize a washcoat, which was then coated onto the honeycomb ceramic substrate. The catalyst was coated at a rate of 9 g/L, and a high-temperature catalyst unit was fabricated with stainless steel to assemble the catalyst system.

Afterward, the outlet of the high-temperature decomposition unit was connected to the inlet of the fabricated high-temperature catalyst unit.

### 2. Measuring the concentrations of harmful exhaust gases

The vacuum carburizing unit was connected to introduce the exhaust gases discharged from the vacuum pump into the fabricated high-temperature decomposition unit. The specific operating conditions of the vacuum carburizing unit were as follows.
1) carburizing temperature of the vacuum carburizing furnace: 980°C
2) quantity of vacuum carburizing furnaces: 10 units X 2 vacuum pumps X 1 MDS
3) continuous operation of vacuum pumps
4) vacuum pump oil: Synthetic oil (Ester oil with additives) / n-phenyl-1-naphthylamine additive of 0.1 to 0.5 % by weight
5) exhaust gas temperature after passing through the vacuum pump: 25 to 35°C

The measurements of the concentrations of harmful substances in the exhaust gases were conducted for the exhaust gases passing through the vacuum carburizing harmful exhaust gas reduction apparatus manufactured according to the present invention (embodiment) and for the exhaust gases not passing through the reduction apparatus according to the present invention (comparative example) after passing through the vacuum pump, and the measurement results are as follows. For reference, the gases input into the vacuum carburizing furnace for measuring the concentrations of harmful substances were as follows.
(1) measurement of NOx, SOx, and CO concentrations: inject N2 at a rate of 1,000 L/hr, apply convective heating at 980°C, and then inject C2H2 at a rate of 4,000 L/hr for 30 SEC
(2) measurement of THC concentration: inject C₂H₂ at a rate of 4,000 L/hr for 30 SEC at 980°C
(3) measurement of benzene concentration (via trapping method): inject C2H2 at a rate of 4,000 L/hr for 60 SEC at 980°C

### 3. Harmful exhaust gas concentration measurement results

In the exhaust gases that passed through the vacuum carburizing harmful exhaust gas reduction apparatus manufactured according to the present invention (embodiment), it was confirmed that the concentrations of carbon monoxide (CO), nitrogen oxides (NOx), sulfur oxides (SOx), total hydrocarbons (THC), and benzene were 0 ppm, 1 ppm, 1 ppm, 80 ppm, and 0 ppm, respectively.

On the other hand, in the exhaust gases discharged from the vacuum pump without passing through the exhaust gas reduction apparatus according to the present invention (comparative example), the concentrations of carbon monoxide (CO), nitrogen oxides (NOx), sulfur oxides (SOx), total hydrocarbons (THC), and benzene were measured as 12600 ppm, 290 ppm, 20 ppm, 12900 ppm, and 9 ppm, respectively.

Through this, it was confirmed that the application of the vacuum carburizing harmful exhaust gas reduction apparatus according to the present invention significantly reduces the concentration of harmful substances in the discharged exhaust gases.

According to the present invention, it is possible to significantly reduce harmful substances such as carbon monoxide, nitrogen oxides, benzene, and total hydrocarbons (THC) emitted through exhaust gases expelled by a vacuum pump during the vacuum carburizing process through high-temperature and catalytic treatment.

According to the present invention, the exhaust gases introduced into the high-temperature decomposition unit are heated at a high temperature, inducing heat-generating and combustion reactions, which oxidize and remove substances consisting of hydrocarbons, tar, soot, etc. in the exhaust gases and, simultaneously, facilitate removing carbon monoxide through oxidation.

Furthermore, even when the exhaust gases, heated to a temperature of 500 degrees Celsius or higher, come into contact with the supported catalyst in the high-temperature catalyst unit of the present invention, the use of a highly heat-resistant ceramic honeycomb carrier makes it possible to maintain excellent catalytic reactivity even at higher temperatures.

### DESCRIPTION OF REFERENCE NUMERALS

- 100:: vacuum carburizing unit
- 110:: vacuum carburizing furnace
- 120:: vacuum pump
- 200:: vacuum carburizing harmful exhaust gas reduction apparatus
- 210:: high-temperature decomposition unit
- 220:: high-temperature catalyst unit

## Claims

1. A vacuum carburizing harmful exhaust gas reduction apparatus comprising:
a high-temperature decomposition unit configured to heat exhaust gases discharged from a vacuum pump in the vacuum carburizing process to a temperature ranging from 500 to 1500°C; and
a high-temperature catalyst unit comprising a supported catalyst supporting a catalyst including one or more selected from a group including platinum (Pt), palladium (Pd), and alloys thereof and configured to allow the exhaust gases heated in the high-temperature decomposition unit to contact the supported catalyst.

2. The vacuum carburizing harmful exhaust gas reduction apparatus of claim 1, wherein the high-temperature decomposition unit is configured to receive injected air to create an oxidizing atmosphere.

3. The vacuum carburizing harmful exhaust gas reduction apparatus of claim 2, wherein the injected air and the introduced exhaust gases have a volumetric ratio ranging from 1:1 to 1:3.

4. The vacuum carburizing harmful exhaust gas reduction apparatus of claim 1, wherein the air is injected to maintain a hydrogen concentration inside the high-temperature decomposition unit at 4% by volume or less.

5. The vacuum carburizing harmful exhaust gas reduction apparatus of claim 1, wherein the supported catalyst is a ceramic honeycomb carrier.

6. The vacuum carburizing harmful exhaust gas reduction apparatus of claim 1, wherein the catalyst is supported on a catalyst support including Lanthanum (La) doped alumina.

7. The vacuum carburizing harmful exhaust gas reduction apparatus of claim 6, wherein the supported catalyst further includes zeolite.

8. A vacuum carburizing harmful exhaust gas reduction method using the vacuum carburizing harmful exhaust gas reduction apparatus of one of claims 1 to 7, the method comprising:
introducing exhaust gases discharged from the vacuum pump in the vacuum carburizing process into the high-temperature decomposition unit;
heating the exhaust gases introduced into the high-temperature decomposition unit to the temperature ranging from 500 to 1500°C; and
introducing the exhaust gases undergone heating treatment in the high-temperature decomposition unit into the high-temperature catalyst unit to contact the catalyst support.

9. The vacuum carburizing harmful exhaust gas reduction method of claim 8, wherein the introduced exhaust gases is heated in the oxidizing atmosphere created by injecting air into the high-temperature decomposition unit.
